# EUROPEAN PATENT APPLICATION

(11) **EP 4 742 336 A1**
(43) Date of publication of application: **13.05.2026**
(21) Application number: 25207574.2
(22) Date of filing: 08.10.2025
(51) Int. Cl.: H01M 10/02, H01M 10/04, H01M 50/136, H01M 50/14, H01M 50/105, H01M 50/184, H01M 50/557, H01M 50/572

(54) **SECONDARY BATTERY AND METHOD OF MANUFACTURING THE SAME**

(30) Priority: 11.11.2024 KR 20240158901
(71) Applicant: SAMSUNG SDI CO., LTD., Yongin-si, Gyeonggi-do 17084 (KR)
(72) Inventor: KANG, Minji, 17084 Yongin-si (KR); CHOI, Jaehyuk, 17084 Yongin-si (KR)
(74) Representative: Marks & Clerk LLP

(57) **Abstract**

A secondary battery includes: an electrode assembly; an exterior portion having an accommodation portion in which the electrode assembly is accommodated and a wing portion extending along a periphery of the accommodation portion, the wing portion including a folded portion having: a plurality of folding bodies that are folded inwardly or outwardly; and a penetration hole portion; and a molded portion that covers and is coupled to the exterior portion along a periphery of the exterior portion and extending through the penetration hole portion.

## Description

### BACKGROUND

### 1. Field

Aspects of embodiments of the present disclosure relate to a secondary battery and a method of manufacturing the same.

### 2. Description of the Related Art

Generally, secondary batteries are rechargeable batteries and are being applied to various technical fields across various industries, such as electrical, electronic, and telecommunication fields, as well as computers.

Secondary batteries are not only widely used as an energy source for mobile electronic devices, such as digital cameras, cellular phones, and laptop computers, but also are attracting attention as an energy source for hybrid and electric vehicles, which address air pollution caused by existing gasoline and diesel internal combustion engines using fossil fuels, and the like.

Secondary batteries are being studied in various ways to improve performance and stability according to the type and amount of use thereof.

The above-described information in this Background section is provided to improve understanding of the background of the present disclosure and, thus, may also include information not constituting the related (or prior) art.

### SUMMARY

Embodiments of the present disclosure include a secondary battery and a method of manufacturing the same in which a molded portion passes through a penetration hole portion (e.g., an opening) formed in a wing portion and covers and is coupled to an exterior portion such that bonding strength between the exterior portion in which an electrode assembly is accommodated and the molded portion may be improved.

Aspects and features of the present disclosure, and other unmentioned aspects and features of the present disclosure can be understood by the following description and will be more clearly understood by describing embodiments of the present disclosure. Also, it will be appreciated that the aspects and features of the present disclosure can be realized by the means and combinations thereof indicated in the claims.

According to an embodiment of the present disclosure, a secondary battery includes an electrode assembly, an exterior portion having an accommodation portion in which the electrode assembly is accommodated and a wing portion extending along a periphery of the accommodation portion, and a molded portion that covers and is coupled to the exterior portion along a periphery of the exterior portion. The wing portion includes a folded portion having a plurality of folding bodies that are folded inwardly or outwardly and a penetration hole portion through which the molded portion passes (or extends).

In an embodiment, the penetration hole portions may be provided in multiple (numbers), and (ones of) the plurality of penetration hole portions may be spaced apart from each other in a longitudinal direction of the folding body.

In an embodiment, the exterior portion may include a first exterior body having the accommodation portion and a first wing portion extending along a periphery of the accommodation portion, and a second exterior body having a second wing portion (capable of) contacting the first wing portion and covering the accommodation portion.

In an embodiment, the folded portion may be formed by inwardly or outwardly (or inward or outward) folding of the first wing portion and the second wing portion that are positioned on opposite sides in a longitudinal direction of the electrode assembly and are coupled to each other.

In an embodiment, the folding bodies may (each) include an inner folding body folded toward a side of the accommodation portion and an outer folding body folded at an end portion of the inner folding body to overlap the inner folding body.

In an embodiment, the inner folding bodies may be provided in multiple (numbers), and the outer folding body may be arranged between (ones of) the plurality of inner folding bodies.

In an embodiment, the molded portion may be formed of an insulating material.

In an embodiment, a thickness of the molded portion may be less than or equal to a thickness of the exterior portion.

In an embodiment, the electrode assembly may include a first electrode tab and a second electrode tab that extend outwardly from the exterior portion.

In an embodiment, the electrode assembly may include a first electrode plate, a second electrode plate, and a separator between the first electrode plate and the second electrode plate. The first electrode plate may be connected to the first electrode tab, and the second electrode plate may be connected to the second electrode tab.

According to another embodiment of the present disclosure, a method of manufacturing a secondary battery includes accommodating an electrode assembly in an exterior portion, forming a folded portion by folding a wing portion, the wing portion extending (or being formed) along a periphery of the exterior portion, and coupling a molded portion to the exterior portion along the periphery of the exterior portion. The folded portion may have a plurality of folding bodies that are folded inwardly or outwardly and a penetration hole portion through which the molded portion passes (to couple the molding potion to the exterior portion).

In an embodiment, the method may further include connecting a protection circuit board to a first electrode tab and a second electrode tab. The electrode assembly includes the first electrode tab and the second electrode tab that extend outwardly from the exterior portion.

In an embodiment, the method may further include connecting an insulating member to the protection circuit board.

In an embodiment, the electrode assembly may include a first electrode plate, a second electrode plate, and a separator between the first electrode plate and the second electrode plate. The first electrode plate may be connected to the first electrode tab, and the second electrode plate may be connected to the second electrode tab.

In an embodiment, the coupling of the molded portion may include arranging, on a mold portion, the exterior portion in which the electrode assembly is accommodated, forming the molded portion by adding an insulating material into the mold portion, and extracting, from the mold portion, the exterior portion to which the molded portion is coupled.

In an embodiment, the penetration hole portions may be provided in multiple (numbers), and (ones of) the plurality of penetration hole portions may be spaced apart from each other in a longitudinal direction of the folding body.

In an embodiment, the exterior portion may include a first exterior body having an accommodation portion in which the electrode assembly is accommodated and a first wing portion extending along a periphery of the accommodation portion, and a second exterior body that has a second wing portion (capable of) contacting the first wing portion and covering the accommodation portion.

In an embodiment, the folded portion may be formed by inwardly or outwardly (or inward or outward) folding of the first wing portion and the second wing portion that are positioned on opposite sides in a longitudinal direction of the electrode assembly and coupled to each other.

In an embodiment, the folding bodies may include an inner folding body folded toward a side of the accommodation portion in which the electrode assembly is accommodated and an outer folding body folded at an end of the inner folding body to overlap the inner folding body.

In an embodiment, a thickness of the molded portion may be less than or equal to a thickness of the exterior portion.

At least some of the above and other features of the invention are set out in the claims.

### BRIEF DESCRIPTION OF THE DRAWINGS

The accompanying drawings illustrate embodiments of the present disclosure and, together with the detailed description of the present disclosure, which will be provided below, provide a further understanding of aspects and features of the present disclosure. However, the present disclosure is not limited to the configurations and arrangements as illustrated in the drawings, in which:
FIG. 1 is a perspective view of a secondary battery, before a penetration hole portion is formed, according to an embodiment;
FIG. 2 is a plan view illustrating a state in which an accommodation portion is positioned on an upper side in a secondary battery according to an embodiment;
FIG. 3 is a perspective view illustrating a state in which wing portions shown in FIG. 2 are folded;
FIG. 4 is an enlarged view of the portion A in FIG. 3;
FIG. 5 is a front cross-sectional view taken along the line I-I' in FIG. 4;
FIG. 6 is a view of a secondary battery according to an embodiment;
FIG. 7 is a flowchart describing steps of a method of manufacturing a secondary battery according to an embodiment;
FIG. 8 is a flowchart describing steps of a process of coupling a molded portion to an exterior portion according to an embodiment;
FIGS. 9A to 9C are views illustrating steps of a process of coupling a molded portion to an exterior portion;
FIG. 10 is a partial cross-sectional view of a folded portion according to another embodiment; and
FIG. 11 is a partial view of a folded portion according to another embodiment.

### DETAILED DESCRIPTION

Hereinafter, embodiments of the present disclosure will be described, in detail, with reference to the accompanying drawings. The terms or words used in the specification and the claims should not be construed as being limited to their ordinary or dictionary meanings but should be construed as having meanings and concepts consistent with the technical idea of the present disclosure based on a principle that an inventor can appropriately define concepts of terms to explain his/her invention in the best way. It should be understood that the embodiments described herein and the configurations illustrated in the drawings are merely some embodiments of the present disclosure and do not represent all technical ideas, aspects, and features of the present disclosure, and thus, various equivalents and modifications that can replace these embodiments can be made at the time of filing this application.

Also, the terms "include (comprise)" and/or "including (comprising)" as used herein specify the presence of the stated shapes, numbers, steps, operations, members, elements, and/or groups thereof and do not preclude the presence or addition of one or more other shapes, numbers, operations, members, elements, and/or groups thereof.

To help understand the present disclosure, the accompanying drawings are not shown to actual scale, and the dimensions of some components may be exaggerated. Also, like reference numerals may refer to like elements in different embodiments.

The expression indicating that two comparative objects are identical to each other means that the two comparative objects are "substantially identical" to each other. Therefore, substantially identical may include deviations considered low in the art, for example, deviations within about 5%. A case where a parameter is uniform in a certain region may mean that the parameter is uniform from an average point of view.

It will be understood that, although the terms "first," "second," and the like may be used herein to describe various elements, these elements should not be limited by these terms. These terms are only used to distinguish one element from another element, and a first element may also be a second element, unless otherwise specifically stated herein.

Throughout the specification, each element may be singular or plural unless otherwise specifically stated herein.

It will be understood that, in case that an element is referred to as being "above (or below)" or "on (or under)" another element, the element can be directly on an upper surface (or lower surface) of the other element, and it may also mean that there are other intervening elements between the element and the other element disposed on (or under) the element.

It will be understood that, in case that an element is referred to as being "connected," "coupled," or "linked" to another element, the element can be directly connected or linked to the other element, and other elements are "interposed" between the element and the other element, or the element may be "connected," "coupled," or "linked" to the other element via other elements. In case that a portion is referred to as being electrically coupled to another portion, it includes not only a case where the portion is directly connected to the other portion, but also a case where the portion is connected to the other portion with other components present therebetween.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. Throughout the specification, "A and/or B" means "A, or B, or A and B," unless otherwise specifically stated herein. The term "and/or" includes any or all combinations of a plurality of listed items. Unless otherwise specifically stated herein, the expression "C to D" means greater than or equal to C and less than or equal to D.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

The terms used herein are to describe embodiments of the present disclosure and are not intended to limit the present disclosure.

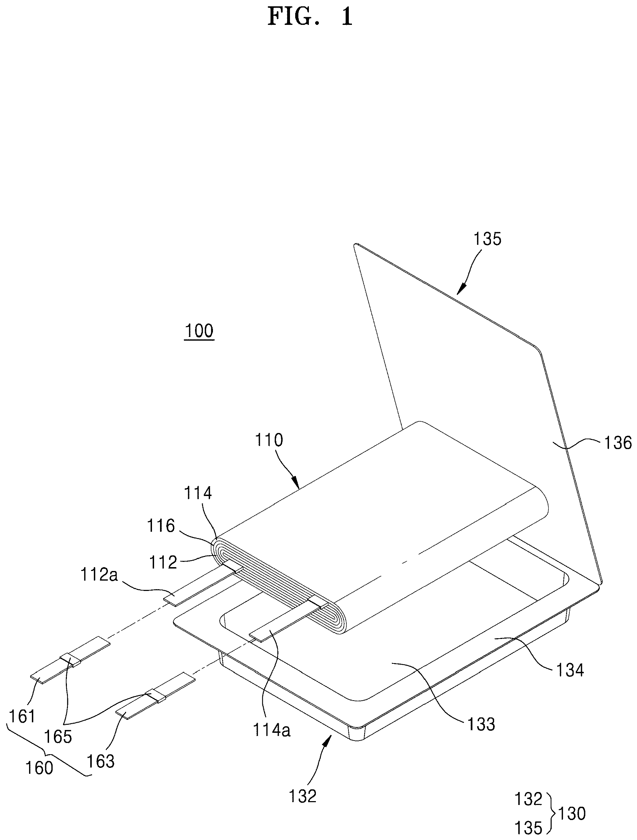

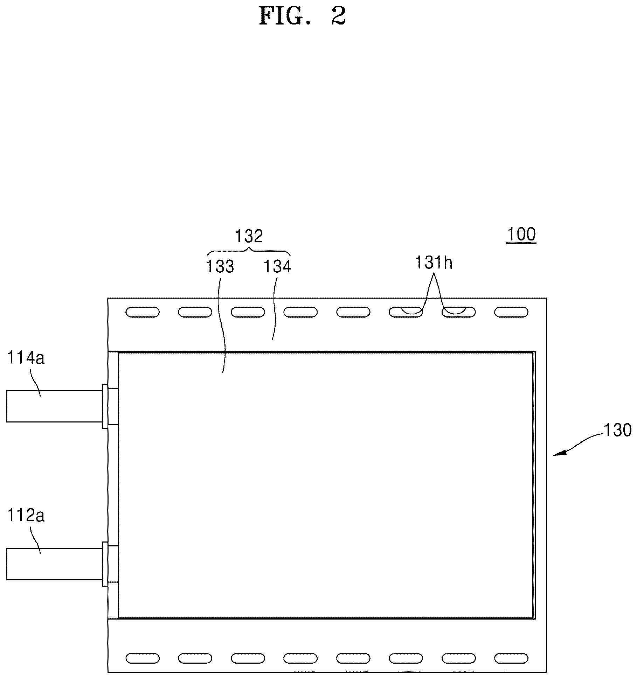

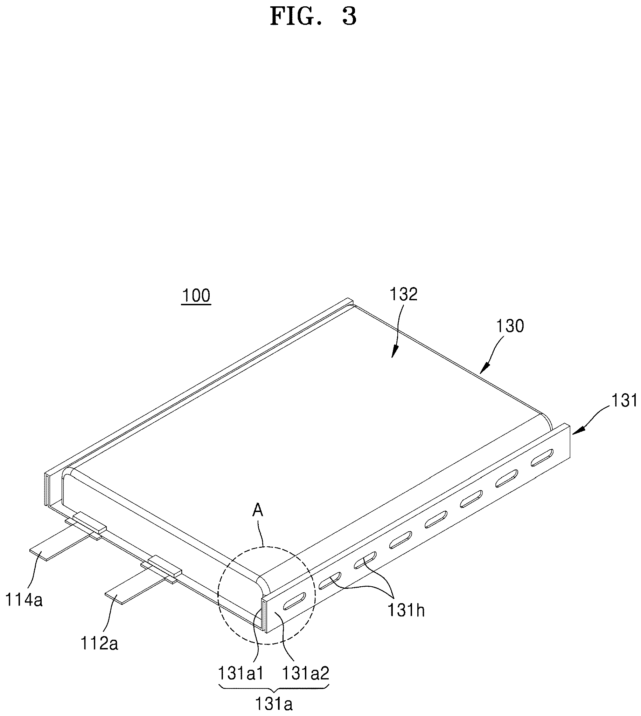

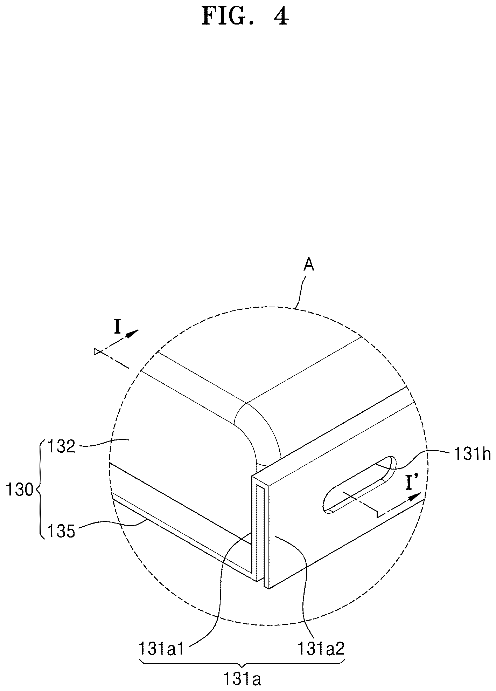

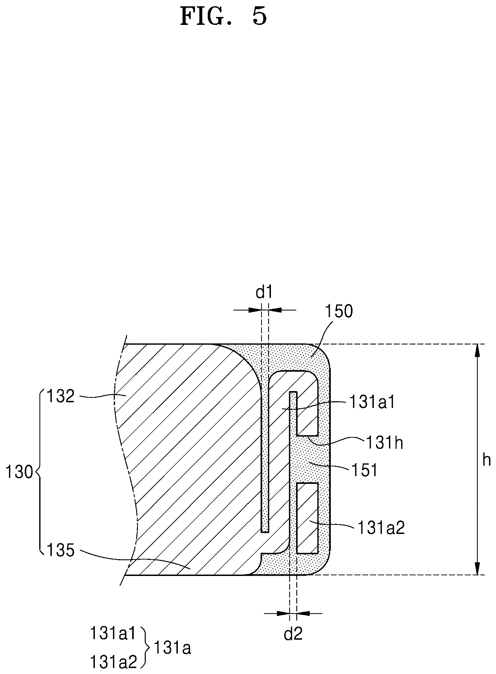

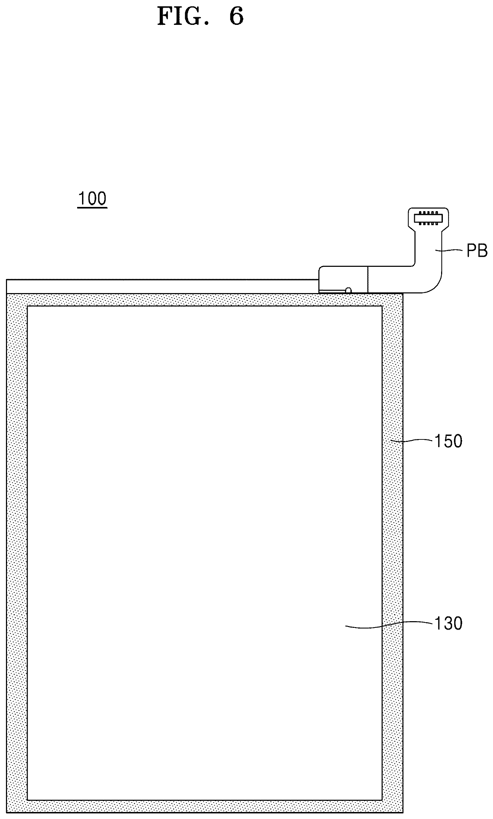

FIG. 1 is a perspective view of a secondary battery 100 before a penetration hole portion is formed according to an embodiment. FIG. 2 is a plan view illustrating the secondary battery 100 in a state in which an accommodation portion is positioned on an upper side in the secondary battery 100 according to an embodiment. FIG. 3 is a perspective view illustrating the secondary battery 100 in a state in which wing portions shown in FIG. 2 are folded. FIG. 4 is an enlarged view of the portion A in FIG. 3. FIG. 5 is a front cross-sectional view taken along the line I-I' in FIG. 4. FIG. 6 is a view of the secondary battery 100 according to an embodiment.

Referring to FIGS. 1 to 6, the secondary battery 100, according to an embodiment, may include an electrode assembly 110, an exterior portion (e.g., a case) 130, a molded portion 150, and a strip terminal 160.

Referring to FIG. 1, in an embodiment, the electrode assembly 110 may include a first electrode plate 112 as a negative electrode plate, a second electrode plate 114 as a positive electrode plate, and a separator 116 between the first electrode plate 112 and the second electrode plate 114.

In an embodiment in which the electrode assembly 110 is a wound stack, a winding axis may be parallel to a longitudinal direction of the exterior portion 130 in which the electrode assembly 110 is accommodated.

In some embodiments, the electrode assembly 110 may be a stack type rather than a winding type, but the shape of the electrode assembly 110 is not limited.

In some embodiments, the electrode assembly 110 may be a Z-stack electrode assembly 110 in which a positive electrode plate and a negative electrode plate are inserted into opposite sides of a separator, which is then folded in Z-stack form.

In some embodiments, one or more electrode assemblies 110 may be stacked with long side surfaces thereof adjacent to each other and accommodated together in the exterior portion 130, and the number of the electrode assemblies 110 is not limited.

The first electrode plate 112 as a negative electrode plate of the electrode assembly 110 may act as a negative electrode, and the second electrode plate 114 as a positive electrode plate of the electrode assembly 110 may act as a positive electrode. The reverse may also be possible.

Referring to FIG. 1, the first electrode plate 112 may include a first electrode tab 112a electrically connected to an uncoated portion of a negative electrode, and the second electrode plate 114 may include a second electrode tab 114a electrically connected to an uncoated portion of a positive electrode.

The first electrode tab 112a and the second electrode tab 114a may be electrically connected to the outside by being welded to a first electrode lead 161 and a second electrode lead 163, respectively, of the strip terminal 160, which is an external terminal. A tab film 165 for insulating the strip terminal 160 from the exterior portion 130 may be attached to the first electrode lead 161 and the second electrode lead 163.

The first electrode plate 112 may be formed by applying a first electrode active material, such as graphite or carbon, onto a first electrode current collector plate including a metal foil, such as copper, a copper alloy, nickel, or a nickel alloy, and may include the first electrode tab 112a (or a first uncoated portion), which is a region at where the first electrode active material is not applied.

The first electrode tab 112a may act as a current flow path between the first electrode plate 112 and a first current collecting portion. In some embodiments, the first electrode tab 112a may be pre-formed by cutting to protrude to one side of the first electrode plate 112 when the first electrode plate 112 is manufactured but may protrude farther to one side than the separator 116 without separate cutting.

The second electrode plate 114 may be formed by applying a second electrode active material, such as a transition metal oxide, onto a second electrode current collector plate including metal foil, such as aluminum or an aluminum alloy, and may include the second electrode tab 114a (or a second uncoated portion), which is a region at where the second electrode active material is not applied.

The second electrode tab 114a may act as a current flow path between the second electrode plate 114 and a second current collecting portion. In some embodiments, the second electrode tab 114a may be pre-formed by cutting to protrude to another side of the second electrode plate 114 when the second electrode plate 114 is manufactured but may protrude farther to another side than the separator 116 without separate cutting.

In some embodiments, the first electrode tab 112a may be located on a side surface at a left end of the electrode assembly 110 and the second electrode tab 114a may be located on a side surface at a right end of the electrode assembly 110, but in other embodiments, both the first electrode tab 112a and the second electrode tab 114a may be located on one surface in the same direction.

The terms "left" and "right" are used herein for convenience of explanation with respect to the secondary battery as illustrated in FIG. 1, and the position may vary upon rotation of the secondary battery in a horizontal or vertical direction.

The first electrode tab 112a of the first electrode plate 112 and the second electrode tab 114a of the second electrode plate 114 may be located respectively at end portions of opposite sides of the electrode assembly 110.

In some embodiments, the electrode assembly 110 may be accommodated in a case together with an electrolyte. In some embodiments, a first current collecting portion and a second current collecting portion may be positioned by being welded and connected to the first electrode tab 112a of the first electrode plate 112 and the second electrode tab 114a of the second electrode plate 114, respectively, which are exposed on opposite sides of the electrode assembly 110.

Referring to FIGS. 1 to 6, in an embodiment, the exterior portion 130 may have an accommodation portion 133 in which the electrode assembly 110 is accommodated and may have a wing portion extending along a periphery of the accommodation portion 133.

Referring to FIG. 1, the exterior portion 130 may include a first exterior body 132 and a second exterior body 135. Peripheral areas (e.g., preset or predetermined areas) of the first exterior body 132 and the second exterior body 135 may be connected to each other and may be coupled to each other to cover (e.g., to seal) the electrode assembly 110.

Referring to FIG. 1, the first exterior body 132 may have the accommodation portion 133 having a depth (e.g. a preset depth), and the electrode assembly 110 may be accommodated in the accommodation portion 133. The first exterior body 132 may have a wing portion, for example, a first wing portion 134, which extends outwardly along a periphery of the accommodation portion 133.

The first wing portion 134 formed by the first exterior body 132 may be in surface contact with and coupled to a second wing portion 136 formed in the second exterior body 135, which will be described below.

When the first wing portion 134 is coupled to the second wing portion 136, a sealing region may be formed along a periphery of the electrode assembly 110 that is accommodated in the accommodation portion 133. The wing portion may include a heat-sealable material and may have a structure in which heat-sealable layers are adhered to each other to form a sealing region.

In an embodiment, the first exterior body 132 may be coupled to the second exterior body 135 in a state in which the electrode assembly 110 is accommodated in the accommodation portion 133, and a wing portion in which the first wing portion 134 and the second wing portion 136 are coupled may be formed along the periphery of the exterior portion 130.

Referring to FIGS. 1 and 4, in an embodiment, the second exterior body 135 may be coupled to the first exterior body 132 and may have the second wing portion 136 configured to contact the first wing portion 134 formed by the first exterior body 132 and cover the accommodation portion 133 formed in the first exterior body 132.

Referring to FIG. 1, when the second exterior body 135 covers the accommodation portion 133 and is coupled to the first exterior body 132, in a state in which the electrode assembly 110 is accommodated in the accommodation portion 133, an accommodation space in which a portion of the electrode assembly 110 is accommodated may be formed at a position corresponding to the accommodation portion 133.

Thus, when the first exterior body 132 and the second exterior body 135 of the exterior portion 130 are coupled to each other while covering the electrode assembly 110, the secondary battery 100 may have a shape protruding upwardly and downwardly with respect to the wing portion formed along the periphery of the exterior portion 130.

The second exterior body 135 may have a wing portion, for example, the second wing portion 136, which extends outwardly along a periphery of a region covering the electrode assembly 110 accommodated in the accommodation portion 133.

The second wing portion 136 formed by the second exterior body 135 may be in surface contact with and coupled to the first wing portion 134. When the first wing portion 134 is coupled to the second wing portion 136, a sealing region may be formed along the periphery of the electrode assembly 110 that is accommodated in the accommodation portion 133.

Referring to FIGS. 2 and 3, the wing portion extending along the periphery of the exterior portion 130 may include folded portions 131 that are positioned at sections along the entire section at where the wing portion is formed, for example, at opposite sides (e.g., upper and lower sides in FIG. 2) with respect to a central axis in a longitudinal direction of the secondary battery 100.

Referring to FIGS. 3 to 5, in an embodiment, the folded portions 131 may be portions of the wing portion extending along the periphery of the exterior portion 130 at where the first wing portion 134 is coupled to the second wing portion 136.

Referring to FIGS. 3 and 4, the folded portions 131 may be positioned on opposite sides in a longitudinal direction of the electrode assembly 110 and may be formed by folding the first wing portion 134 and the second wing portion 136 that are coupled to each other inwardly or outwardly.

The folded portion 131 may include a plurality of folding bodies 131a1 and 131a2 that are folded inwardly or outwardly and may have penetration hole portions (e.g., openings or holes) 131h through which the molded portion 150, which will be described below, can pass.

Referring to FIGS. 2 and 3, in an embodiment, the folded portions 131 may be provided as a pair and may be arranged on opposite sides with respect to a central axis in a longitudinal direction of the secondary battery 100, for example, the exterior portion 130.

The folded portion 131 may include a plurality of folding bodies 131a, for example, an inner folding body 131a1 that is folded toward a side of the accommodation portion 133 and an outer folding body 131a2 that is folded at an end of the inner folding body 131a1 to overlap the inner folding body 131a1.

For example, the plurality of folding bodies 131a provided in the folded portion 131 may include the inner folding body 131a1 and the outer folding body 131a2.

Referring to FIGS. 4 and 5, the inner folding body 131a1 may be folded from the second exterior body 135 toward the first exterior body 132 (e.g., from the lower side toward the upper side in FIG. 5). The outer folding body 131a2 may be folded from the first exterior body 132 toward the second exterior body 135 (e.g., from the upper side to the lower side in FIG. 5).

For example, the outer folding body 131a2 may be folded at an end of the inner folding body 131a1 to overlap the inner folding body 131a1.

For example, the inner folding body 131a1 may be folded toward the electrode assembly 110, and the outer folding body 131a2 may be folded away from the electrode assembly 110.

The inner folding body 131a1 and the outer folding body 131a2 may be folded in opposite directions. In an embodiment, the inner folding bodies 131a1 and the outer folding bodies 131a2 may be alternately connected to each other.

Referring to FIG. 5, the folded portion 131 includes a plurality of folding bodies 131a that are folded inwardly or outwardly, for example, the inner folding body 131a1 and the outer folding body 131a2, and the inner folding body 131a1 may be connected to the outer folding body 131a2, thus reducing a thickness of the folded portion 131 provided in the wing portion.

Referring to FIG. 5, due to the plurality of folding bodies 131a1 and 131a2, the thickness of the folded portion 131 may be relatively smaller than a thickness h of the exterior portion 130. In other embodiments, due to the reduced thickness of the folded portions 131, a thickness of the molded portion 150 that covers and is coupled to the exterior portion 130, for example, the folded portions 131, may be less than or equal to the thickness h of the exterior portion 130.

Due to the reduced thickness of the molded portion 150, the thickness of the secondary battery 100 may also be reduced, and the overall size of the secondary battery 100 may be reduced.

Referring to FIG. 5, due to the plurality of folding bodies 131a1 and 131a2 being alternately arranged in different folding directions, the inner folding body 131a1 and the accommodation portion 133 may be spaced apart from each other by a distance d1, and the inner folding body 131a1 and the outer folding body 131a2 may be spaced apart from each other by a distance d2.

Separation spaces may be formed by separation between the accommodation portion 133 formed in the first exterior body 132 and the inner folding body 131a1 by the distance d1 and separation between the inner folding body 131a1 and the outer folding body 131a2 by the distance d2. Thus, when the molded portion 150, which will be described in more detail below, is coupled to the exterior portion 130, an insulating material IM that forms the molded portion 150 may penetrate into (e.g., may flow into) the separation spaces.

In some embodiments, upon curing of the insulating material IM, bonding strength between the molded portion 150 and the exterior portion 130 may be improved.

Referring to FIGS. 2 to 5, in an embodiment, the penetration hole portion 131h may be formed to pass through the folded portion 131. The molded portion 150 may pass through the penetration hole portion 131h and may have an insert portion 151 arranged in (or formed in) the penetration hole portion 131h.

The insert portion 151 formed in the molded portion 150 may pass through the penetration hole portion 131h and may connect an inner region and an outer region of the folded portion 131 having the penetration hole portion 131h formed therein, for example, the folding bodies 131a. Thus, bonding strength between the molded portion 150 and the folded portion 131 and bonding strength between the molded portion 150 and the exterior portion 130 including the folded portions 131 may be improved.

Referring to FIG. 5, the penetration hole portion 131h may be formed in the folding body 131a that is relatively spaced apart from the accommodation portion 133 or the electrode assembly 110 accommodated in the accommodation portion 133, from among the plurality of folding bodies 131a.

Referring to FIG. 5, the penetration hole portion 131h may be formed as a hole in the outer folding body 131a2 that is relatively spaced apart from the accommodation portion 133 or the electrode assembly 110, from among the plurality of folding bodies 131a.

Referring to FIGS. 3 and 4, the penetration hole portions 131h are provided in multiple, and the plurality of penetration hole portions 131h may be spaced apart from each other in a longitudinal direction of the folding body 131a.

Referring to FIGS. 2 and 3, the penetration hole portion 131h may be formed in a shape having a pair of linear sections formed along the longitudinal direction (e.g., the lateral direction in FIG. 2) of the folding body 131a and curved sections connecting the pair of linear sections (e.g., the penetration hole portions 131h may have a shape of an oval with parallel sides).

However, the present disclosure is not limited thereto, and the penetration hole portion 131h may have various shapes, such as triangular, rectangular, circular, oval, and rhombic shapes within the idea where the insulating material IM that forms the molded portion 150 passes and is cured to form the insert portion 151 and the molded portion 150 is formed to connect the inner space and the outer space of the folding body 131a.

In an embodiment, respective centers of the plurality of penetration hole portions 131h may be arranged on the same axis in the longitudinal direction of the folding body 131a, but various modifications are possible. For example, the respective centers of the plurality of penetration hole portions 131h may be alternately arranged on upper and lower sides in a thickness direction (e.g., the lateral direction in FIG. 5) of the exterior portion 130.

In an embodiment, the plurality of penetration hole portions 131h may have the same shape and be spaced apart from each other in the longitudinal direction of the folding body 131a. However, the present disclosure is not limited thereto and various modifications are possible. For example, the plurality of penetration hole portions 131h may have different sizes.

Referring to FIGS. 1 and 2, the penetration hole portions 131h may be formed after the first wing portion 134 and the second wing portion 136 that are formed in the first exterior body 132 and the second exterior body 135, respectively, are coupled to form a wing portion.

Referring to FIGS. 5 and 6, in an embodiment, the molded portion 150 may cover and may be coupled to the exterior portion 130 along the periphery of the exterior portion 130 and may be formed of the insulating material IM. The molded portion 150 may be formed by curing the insulating material IM in a flowable state while surrounding the exterior portion 130.

Referring to FIG. 6, the molded portion 150 may cover and may be coupled to the folded portions 131 extending on opposite sides in a longitudinal direction (e.g., the vertical direction in FIG. 6) of the secondary battery 100.

Referring to FIG. 5, the thickness h of the molded portion 150 may be less than or equal to the thickness of the exterior portion 130.

This structure is possible because the folded portion 131 provided in the wing portion includes a plurality of folding bodies 131a that are folded inwardly or outwardly, and because the thickness of the folded portion 131 is relatively smaller than the thickness of the exterior portion 130, the thickness of the molded portion 150 that covers and is coupled to the folded portions 131 may also be less than or equal to the thickness of the exterior portion 130 and may be equal to the maximum thickness of the exterior portion 130.

Referring to FIG. 5, the molded portion 150 may pass through the penetration hole portion 131h formed in the folding body 131a, for example, the outer folding body 131a2, provided in the folded portion 131. For example, the molded portion 150 may have (or may form) the insert portion 151 arranged inside the penetration hole portion 131h.

The insert portion 151 may be positioned inside the penetration hole portion 131h, the inner space and the outer space of the folding body 131a may be connected to each other with the penetration hole portion 131h present therebetween, and the insert portion 151 may have a locking structure.

For example, the molded portion 150 may penetrate into a space formed between the inner folding body 131a1 and the outer folding body 131a2 by passing through the penetration hole portion 131h formed in the outer folding body 131a2, while covering the plurality of folding bodies 131a that are folded inwardly or outwardly.

In an embodiment, the insert portions 151 may be provided in multiple in the molded portion 150, and the plurality of insert portions 151 may correspond to the plurality of penetration hole portions 131h.

The insulating material IM that forms the molded portion 150 may be cured while passing through the penetration hole portion 131h formed in the outer folding body 131a2, thereby forming the insert portion 151, and thus, bonding strength between the exterior portion 130 and the molded portion 150 may be improved.

Referring to FIG. 5, the plurality of folding bodies 131a1 and 131a2 may be alternately arranged in different folding directions, the inner folding body 131a1 and the accommodation portion 133 may be spaced apart from each other by the distance d1, and the inner folding body 131a1 and the outer folding body 131a2 may be spaced apart from each other by the distance d2.

The insulating material IM that forms the molded portion 150 may penetrate into a separation space formed between the accommodation portion 133 and the inner folding body 131a1 due to the distance d1 between the accommodation portion 133 formed in the first exterior body 132 and the inner folding body 131a1.

In some embodiments, the insulating material IM that forms the molded portion 150 may pass through the penetration hole portion 131h formed in the outer folding body 131a2 and penetrate into a separation space formed between the inner folding body 131a1 and the outer folding body 131a2 due to the distance d2 between the inner folding body 131a1 and the outer folding body 131a2.

The insulating material IM penetrating into the separation space may be cured, thereby improving bonding strength between the molded portion 150 and the exterior portion 130.

A method of manufacturing the secondary battery according to an embodiment of the present disclosure will now be described.

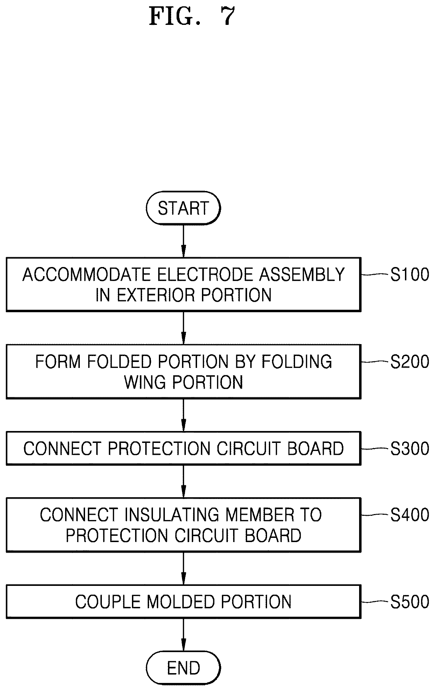

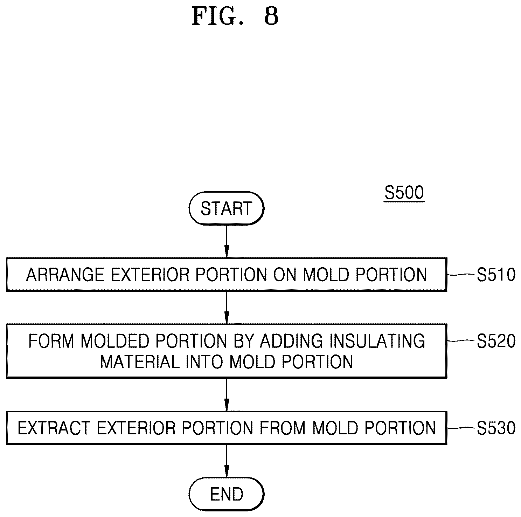

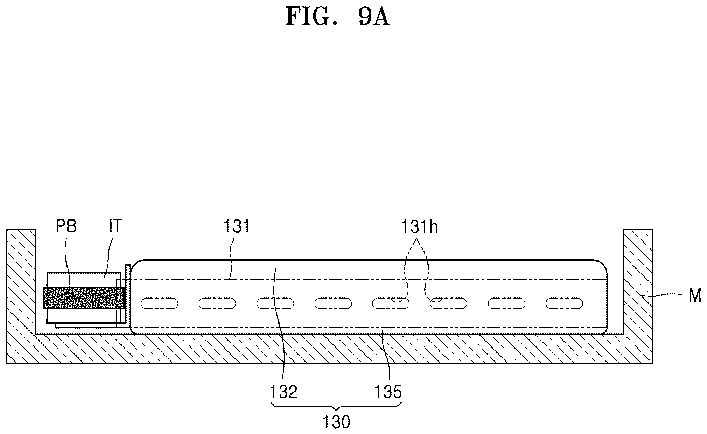

FIG. 7 is a flowchart describing steps of a method of manufacturing a secondary battery according to an embodiment. FIG. 8 is a flowchart describing steps of a process of coupling a molded portion to an exterior portion according to an embodiment. FIGS. 9A to 9C are views illustrating steps of coupling a molded portion to an exterior portion.

The method of manufacturing the secondary battery, according to an embodiment of the present disclosure, may include accommodating an electrode assembly in an exterior portion (S100), forming a folded portion by folding a wing portion (S200), connecting a protection circuit board (S300), connecting an insulating member to the protection circuit board (S400), and coupling a molded portion (S500).

Referring to FIG. 1, the accommodation of the electrode assembly (S100) is a process of seating and accommodating the electrode assembly 110 in the exterior portion 130, for example, the accommodation portion 133 formed in the first exterior body 132, in which the electrode assembly 110 may be arranged in the accommodation portion 133, and the second exterior body 135 may cover the electrode assembly 110 accommodated in the first exterior body 132.

When the first exterior body 132 is coupled to the second exterior body 135, a wing portion may be formed along a periphery of the exterior portion 130, for example, the first exterior body 132 and the second exterior body 135.

Referring to FIGS. 3, 4, and 7, the formation of the folded portion (S200) is a process of folding sections of the wing portion that extend along the periphery of the exterior portion 130 such that the folded portions 131 may be formed by folding the wing portions formed on opposite sides with respect to a central axis in a longitudinal direction (e.g., the lateral direction in FIG. 2) of the secondary battery 100.

Referring to FIG. 2, the penetration hole portions 131h may be formed in sections of the wing portions in which the folded portions 131 are to be formed, before the folded portions 131 are formed by folding the wing portions.

However, the present disclosure is not limited thereto, and as illustrated in FIGS. 4 and 5, the folding bodies 131a may be folded inwardly or outwardly, and then, the penetration hole portion 131h may be formed in the folding body 131a, for example, the outer folding body 131a2, which is relatively spaced apart from the accommodation portion 133.

Referring to FIGS. 6, 7, and 9A, the connection of the protection circuit board (S300) is a process of connecting a protection circuit board PB to the electrode assembly 110. Next, an insulating member IT is connected to the protection circuit board PB (S400), such that the protection circuit board PB may be covered by the insulating member IT.

The insulating member IT may be connected in tape form to the protection circuit board PB, but various modifications are possible within the idea where an insulating layer may be formed on the protection circuit board PB.

After the protection circuit board PB is connected to the electrode assembly 110, the protection circuit board PB may be bent in a direction. This is a generally known, and thus a detailed description thereof will be omitted.

Referring to FIGS. 7 and 9A to 9C, the coupling of the molded portion (S500) is a process of coupling the molded portion 150 to the exterior portion 130 to cover the exterior portion 130 along a periphery thereof and may include arranging an exterior portion on a mold portion (S510), forming the molded portion by adding an insulating material into the mold portion (S520), and extracting the exterior portion from the mold portion (S530).

Referring to FIG. 9A, the arrangement of the exterior portion (S510) includes arranging the exterior portion 130 on a mold portion M having a depth (e.g., a preset depth). In this regard, the protection circuit board PB may be connected to the electrode assembly 110 accommodated in the exterior portion 130.

In this regard, the exterior portion 130 may have the folded portions 131 formed by folding sections of the wing portions that extend along the periphery of the exterior portion 130.

The folded portion 131 may have a plurality of folding bodies that are folded inwardly or outwardly, and the exterior portion 130 may be arranged on the mold portion M in a state in which the penetration hole portion 131h is formed in the outer folding body 131a2 that is relatively spaced apart from the accommodation portion 133.

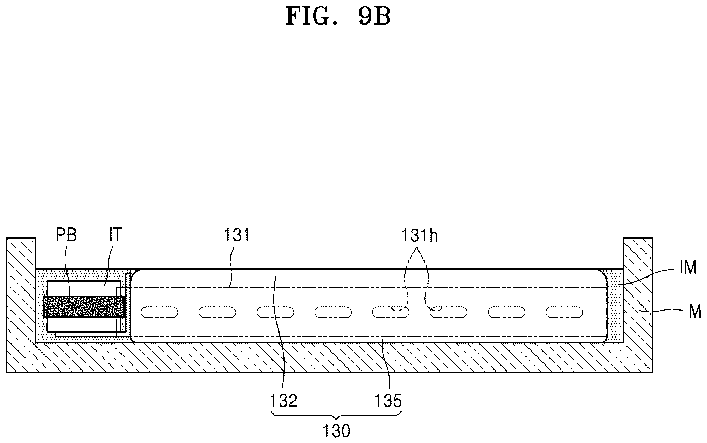

Referring to FIG. 9B, the addition of the insulating material (S520) is a process of adding the insulating material IM for forming the molded portion 150 into the mold portion M at where the exterior portion 130 is arranged such that the insulating material IM may cover wing portions formed along the periphery of the exterior portion 130.

Referring to FIG. 5, the insulating material IM for forming the molded portion 150 may penetrate, in a flowable state, into a space formed between the inner folding body 131a1 and the outer folding body 131a2 through the penetration hole portion 131h formed in the folded portion 131, for example, the outer folding body 131a2.

In some embodiments, the insert portion 151 positioned inside the penetration hole portion 131h may connect the inner space and the outer space of the outer folding body 131a2, thereby improving bonding strength between the exterior portion 130 and the molded portion 150 formed by curing the insulating material IM.

Referring to FIGS. 5 and 9B, the folded portion 131 may have a plurality of folding bodies 131a that are folded inward or outward, and the insulating material IM is cured through the penetration hole portion 131h formed in the outer folding body 131a2 that is relatively spaced apart from the electrode assembly 110, thereby forming the molded portion 150. Thus, compared to an embodiment in which the penetration hole portion 131h is not formed, the contact area between the molded portion 150 and the exterior portion 130, for example, the folded portion 131 may be increased, the thickness of the molded portion 150 may be reduced, and the minimum thickness of the secondary battery 100 may be ensured.

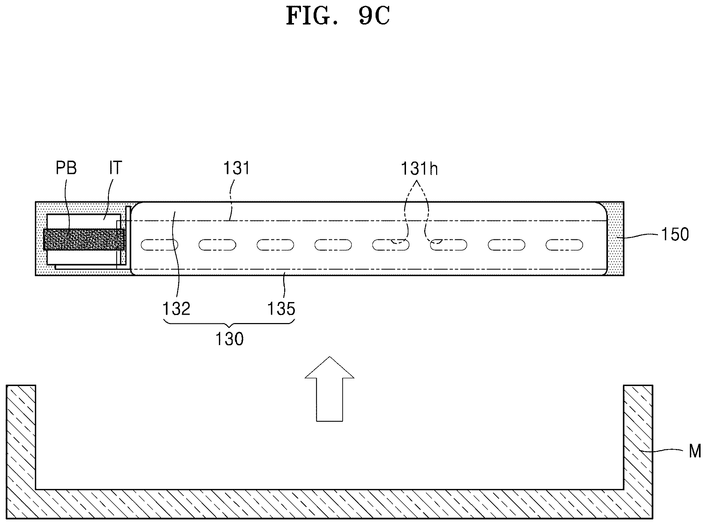

Referring to FIG. 9C, the extraction of the exterior portion (S530) is a process of extracting, from the mold portion M, the molded portion 150 formed by curing the insulating material IM and the exterior portion 130 that are in a bonded state. Thus, as illustrated in FIG. 6, the secondary battery 100 with improved bonding strength between the molded portion 150 and the exterior portion 130 may be manufactured.

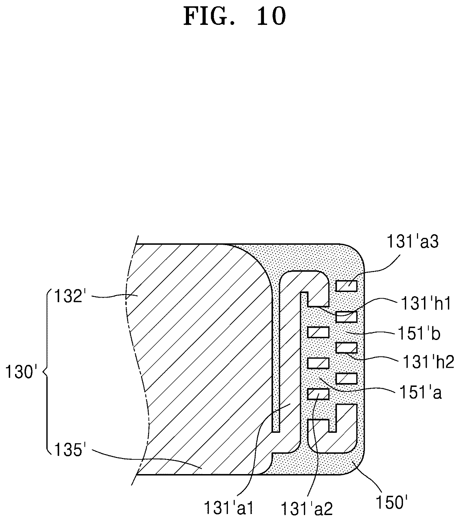

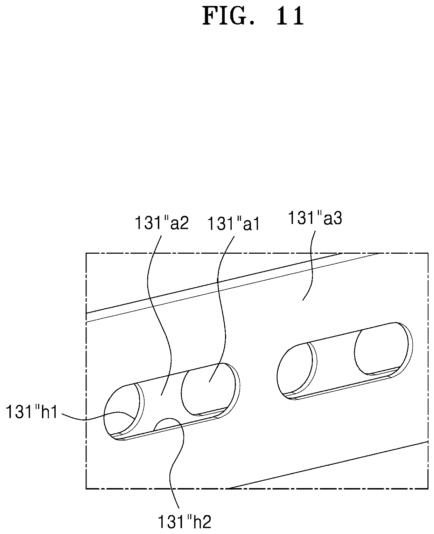

Hereinafter, the configurations and arrangements of secondary batteries according to other embodiments of the present disclosure will be described. FIG. 10 is a partial cross-sectional view of a folded portion according to another embodiment. FIG. 11 is a partial view of a folded portion according to another embodiment.

Referring to FIG. 10, a folded portion included in a secondary battery according to another embodiment may include a plurality of inner folding bodies. For example, an outer folding body 131'a2 may be arranged between a plurality of inner folding bodies 131'a1 and 131'a3.

Referring to FIG. 10, a penetration hole portion may be formed in each of the outer folding body 131'a2 and the inner folding body 131'a3 that is arranged outside relative to the outer folding body 131'a2.

Penetration hole portions 131'h1 and 131'h2 that are formed in the outer folding body 131'a2 and the inner folding body 131'a3, respectively, may be arranged to overlap with each other by a width (e.g., a preset width) or less.

Thus, the insulating material passing through the penetration hole portions 131'h1 and 131'h2 that are formed in different folding bodies 131'a2 and 131'a3, respectively, and arranged to overlap with each other may be cured to form a molded portion 150'.

For example, the insulating material may penetrate into a space between the inner folding body 131'a3 arranged on the outermost side and the outer folding body 131'a2 and a space between the inner folding body 131'a1 arranged on the innermost side and the outer folding body 131'a2 and may be cured, thereby forming the molded portion 150', and bonding strength between the molded portion 150' and an exterior portion 130' may be improved.

Referring to FIG. 10, the penetration hole portions 131'h1 and 131'h2 formed in the folding bodies 131'a2 and 131'a3, respectively, may overlap with each other by a width or less in a thickness direction.

However, the present disclosure is not limited thereto and various modifications are possible. For example, as illustrated in FIG. 11, penetration hole portions 131"h1 and 131"h2 formed in folding bodies 131"a2 and 131"a3, respectively, overlap with each other by a width or less in a longitudinal direction of the folded portion.

The secondary batteries according to other embodiments of the present disclosure have the same or substantially similar configurations, operating principles, and features as those of the electrode assembly 110, the remaining configuration of the exterior portion 130, the molded portion 150, and the strip terminal 160, according to an embodiment of the present disclosure, except that a plurality of inner folding bodies are provided, an outer folding body is arranged between the plurality of inner folding bodies, and the penetration hole portions 131'h1, 131'h2, 131"h1, and 131"h2 formed in the inner folding bodies 131'a3 and 131"a3 and the outer folding bodies 131'a2 and 131"a2, respectively, overlap with each other by a width or less in a longitudinal direction or a thickness direction. Thus, redundant detailed description thereof will be omitted.

In a secondary battery according to embodiments of the present disclosure, a molded portion may pass through a penetration hole portion formed in a wing portion, for example, a folded portion, and may cover and be coupled to an exterior portion. Thus, bonding strength between the exterior portion in which an electrode assembly is accommodated and the molded portion may be improved.

In other embodiments, the wing portion formed in the exterior portion may have a plurality of folding bodies that are folded inward or outward, and thus the thicknesses of the folded portion and the molded portion that covers the folded portion may be reduced.

According to one or more embodiments, a molded portion may pass through a penetration hole portion formed in a wing portion, for example, a folded portion, and may cover and be coupled to an exterior portion. Thus, bonding strength between the exterior portion and the molded portion may be improved.

However, aspects and features of the present disclosure are not limited to those described above, and other unmentioned aspects and features will be clearly understood by those of ordinary skill in the art from the description of the present disclosure and the claims provided below.

While the present disclosure has been described with reference to example embodiments and drawings, the present disclosure is not limited thereto and it will be apparent to those of ordinary skill in the art that various modifications and changes can be made within the scope of the following claims.

## Claims

1. A secondary battery comprising:
an electrode assembly;
an exterior portion having an accommodation portion in which the electrode assembly is accommodated and a wing portion extending along a periphery of the accommodation portion, the wing portion comprising a folded portion having:
a plurality of folding bodies that are folded inwardly or outwardly; and
a penetration hole portion; and
a molded portion that covers and is coupled to the exterior portion along a periphery of the exterior portion and extending through the penetration hole portion.

2. The secondary battery as claimed in claim 1, wherein the penetration hole portions are provided in multiple, and
wherein ones of the plurality of penetration hole portions are spaced apart from each other in a longitudinal direction of the folding body.

3. The secondary battery as claimed in claim 1 or claim 2, wherein
(A) the exterior portion comprises:
a first exterior body having the accommodation portion and a first wing portion extending along the periphery of the accommodation portion; and
a second exterior body that has a second wing portion contacting the first wing portion and covering the accommodation portion;
and/or
(B) the folded portion being formed by inwardly or outwardly folding of the first wing portion and the second wing portion that are positioned on opposite sides in a longitudinal direction of the electrode assembly and are coupled to each other.

4. The secondary battery as claimed in any preceding claim, wherein the folding bodies each comprise:
an inner folding body folded toward a side of the accommodation portion; and
an outer folding body folded at an end of the inner folding body to overlap the inner folding body; and, optionally, wherein the inner folding bodies are provided in multiple, and the outer folding body are arranged between the plurality of inner folding bodies.

5. The secondary battery as claimed in any preceding claim, wherein the molded portion is formed of an insulating material.

6. The secondary battery as claimed in any preceding claim, wherein a thickness of the molded portion is less than or equal to a thickness of the exterior portion.

7. The secondary battery as claimed in any preceding claim, wherein
(A) the electrode assembly comprises a first electrode tab and a second electrode tab that extend outwardly from the exterior portion;
and/or
(B) the method further includes connecting an insulating member to the protection circuit board.

8. The secondary battery as claimed in claim 7, wherein the electrode assembly comprises: a first electrode plate; a second electrode plate; and a separator between the first electrode plate and the second electrode plate, and
wherein the first electrode plate is connected to the first electrode tab, and the second electrode plate is connected to the second electrode tab.

9. A method of manufacturing a secondary battery, the method comprising:
accommodating an electrode assembly in an exterior portion;
forming a folded portion by folding a wing portion, the wing portion extending along a periphery of the exterior portion, the folded portion comprising a plurality of folding bodies that are folded inwardly or outwardly and having a penetration hole portion; and
coupling a molded portion to the exterior portion along the periphery of the exterior portion and through the penetration hole portion.

10. The method as claimed in claim 9, further comprising connecting a protection circuit board to a first electrode tab and a second electrode tab of the electrode assembly,
wherein the first electrode tab and the second electrode tab extend outwardly from the exterior portion.

11. The method as claimed in claim 10, wherein the electrode assembly comprises: a first electrode plate; a second electrode plate; and a separator between the first electrode plate and the second electrode plate, and
wherein the first electrode plate is connected to the first electrode tab, and the second electrode plate is connected to the second electrode tab.

12. The method as claimed in any of claims 9 to 11, wherein the coupling of the molded portion comprises:
arranging, on a mold portion, the exterior portion in which the electrode assembly is accommodated;
forming the molded portion by adding an insulating material into the mold portion; and
extracting, from the mold portion, the exterior portion to which the molded portion is coupled.

13. The method as claimed in claim any of claims 9 to 12, wherein
(A) the exterior portion comprises:
a first exterior body having an accommodation portion in which the electrode assembly is accommodated and a first wing portion extending along a periphery of the accommodation portion; and
a second exterior body that has a second wing portion contacting the first wing portion and covering the accommodation portion; and, optionally,
wherein the folded portion is formed by inwardly or outwardly folding the first wing portion and the second wing portion that are positioned on opposite sides in a longitudinal direction of the electrode assembly and coupled to each other.

14. The method as claimed in any of claims 9 to 13, wherein the folding bodies comprise:
an inner folding body folded toward a side of the accommodation portion in which the electrode assembly is accommodated; and
an outer folding body folded at an end of the inner folding body to overlap the inner folding body.

15. The method as claimed in any of claims 9 to 14, wherein
(A) a thickness of the molded portion is less than or equal to a thickness of the exterior portion;
and/or
(B) the penetration hole portions are provided in multiple, and ones of the plurality of penetration hole portions are spaced apart from each other in a longitudinal direction of the folding body.
